# DEMANDE DE BREVET EUROPEEN

(11) **EP 2 511 239 A1**
(43) Date de publication de la demande: **17.10.2012**
(21) Numéro de dépôt: 12163469.5
(22) Date de dépôt: 05.04.2012
(51) Int. Cl.: C02F 1/28, C02F 1/52, C02F 9/00

(54) **Procédé de traitement d'eau à traiter par clarification comprenant une adsorption d'une portion d'eau clarifiée et une clarification d'un mélange d'eau clarifiée adsorbée et d'eau à traiter**

(30) Priorité: 11.04.2011 FR 1153153
(71) Demandeur: Veolia Water Solutions & Technologies Support, 94417 Saint-Maurice Cedex (FR)
(72) Inventeur: Giraud, Isabelle, 35410 NOUVOITOU (FR); Gaid, Abdelkader, 75014 PARIS (FR); Sauvignet, Philippe, 35460 SAINT-ETIENNE-EN-COGLES (FR)
(74) Mandataire: Larcher, Dominique

(57) **Abrégé**

L'invention concerne un procédé de traitement d'une eau à traiter comprenant :
- une étape de clarification de ladite eau à traiter produisant une eau clarifiée,
- une étape de mise en contact d'une partie de ladite eau clarifiée avec un réactif adsorbant pulvérulent produisant un mélange eau clarifiée-réactif adsorbant pulvérulent ;
- une étape de mélange dudit mélange avec ladite eau à traiter ;
- une étape d'évacuation du reste d'eau clarifiée.

## Description

### 1. Domaine de l'invention

Le domaine de l'invention est celui du traitement des eaux industrielles (eaux usées et eaux de process), des eaux municipales et des eaux potables.

L'invention trouve tout particulièrement une application dans les traitements de potabilisation d'eaux brutes présentant une concentration en Carbone Organique Dissous (COD) inférieure à 10 mg/l et préférentiellement inférieure à 6 à 8 mg/l dans des installations de petite taille dont la production est inférieure ou égale à 2000 m³/h.

### 2. Art antérieur et ses inconvénients

En France, le code de la santé publique (décret du 11 janvier 2007) impose que la concentration en COT des eaux potables soit inférieure ou égale à 2 mg/l.

Dans ce but, diverses techniques permettant d'abattre la teneur en matière organique des eaux à potabiliser ont été développées.

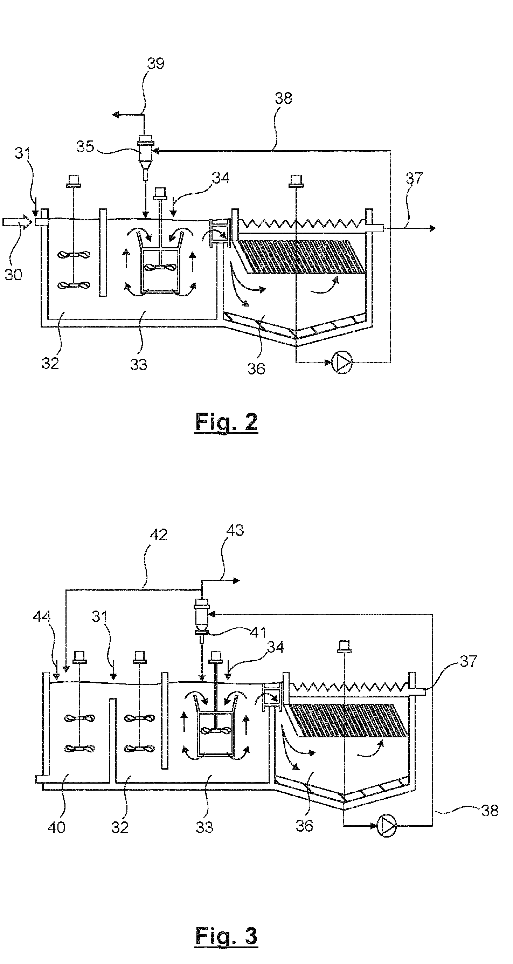

On connaît ainsi une technique qui consiste à traiter une eau brute en la mettant en contact avec du Charbon Actif en Poudre (CAP), puis par coagulation, floculation et décantation, le cas échéant lestée, en vue de produire une eau traitée. Une installation de ce type est illustrée à la figure 3.

La mise en oeuvre d'une telle technique ne permet pas de produire une eau dont la concentration en COT soit inférieure ou égale à 2 mg/l à moins d'employer une quantité de CAP déraisonnable sur un plan économique. Le CAP est en effet un réactif adsorbant noble en ce sens qu'il est relativement cher, sont coût étant approximativement compris entre 1500 et 2500 € la tonne.

En outre, on sait que la matière organique comprend de la matière organique adsorbable (encore appelée matière organique dissoute), de la matière organique floculable et de la matière organique dure (également appelée talon). La mise en oeuvre de cette technique conduit donc à traiter par adsorption une partie de la matière organique floculable. Le CAP est dans ce cas utilisé à mauvais escient pour traiter non seulement la matière organique adsorbable non floculable mais également au moins en partie la matière organique adsorbable et floculable.

Une autre technique consiste à traiter une eau brute par coagulation, floculation et décantation, le cas échéant lestée, en vue de produire une eau clarifiée, laquelle subit une percolation sur une colonne filtre de Charbon Actif en Grains (CAG) en vue de produire une eau potable.

La mise en oeuvre d'une telle technique permet de produire une eau potable dont la concentration en COT est largement inférieure à la réglementation, à savoir à 2 mg/l. Elle conduit en d'autres termes à faire de la surqualité, c'est-à-dire à produire une eau dont la qualité est largement supérieure à la qualité souhaitée. Une telle technique n'est donc pas appropriée au traitement de potabilisation d'une eau brute dont la concentration en matière organique ou Carbone Organique Dissous (COD) est inférieure à 10 mg/l.

Par ailleurs, les capacités d'adsorption du CAG de la colonne sont finies. Il est par conséquent nécessaire de renouveler régulièrement ce CAG. Ceci tend à augmenter le coût d'exploitation de cette technique.

Il est enfin nécessaire de procéder à des rétrolavages réguliers de la colonne en y injectant de l'eau traitée de façon à limiter son colmatage. La consommation en eau traitée induite par ces rétrolavages conduit à réduire la quantité d'eau produite et par conséquent le rendement de cette technique.

Enfin, une autre technique consiste à traiter une eau brute par coagulation, floculation et décantation, le cas échéant lestée, en vue de produire une eau clarifiée. Cette eau clarifiée est ensuite introduite dans une zone de mélange dans laquelle est injecté du CAP. L'eau traitée est ensuite séparée du CAP par microfiltration ou ultrafiltration.

La mise en oeuvre d'une telle technique conduit également à faire de la surqualité du fait qu'elle permet de produire une eau potable dont la concentration en COT est largement inférieure à la réglementation, à savoir à 2 mg/l. Cette technique n'est donc pas non plus appropriée au traitement de potabilisation d'une eau brute dont la concentration en matière organique ou Carbone Organique Dissous (COD) est inférieure à 10 mg/l.

Par ailleurs, la séparation du CAP et de l'eau comporte le risque d'entraîner une détérioration prématurée des membranes de filtration, ce qui est susceptible d'induire un surcoût d'investissement.

### 3. Objectifs de l'invention

L'invention a notamment pour objectif de pallier ces inconvénients de l'art antérieur.

Plus précisément, un objectif de l'invention est de fournir, dans au moins un mode de réalisation, une technique de traitement d'eau notamment par clarification qui permette de produire une eau traitée dans le respect d'une démarche de développement durable.

En particulier, un objectif de l'invention est de procurer une telle technique qui permette de traiter une eau brute présentant une concentration en Carbone Organique Dissous (COD) inférieure à 10mg/l en vue de produire, sans sur qualité, une eau traitée dont la concentration en COT soit inférieure ou égale à 2 mg/l.

Notamment, un autre objectif de l'invention est de mettre en oeuvre, dans au moins un mode de réalisation, une telle technique qui conduise à réduire la consommation en réactif adsorbant.

L'invention a encore pour objectif de procurer, dans au moins un mode de réalisation, une telle technique qui puisse être mise en oeuvre en réhabilitant de manière simple une installation existante de traitement d'eau notamment par clarification.

Un autre objectif de l'invention est de mettre en oeuvre, dans au moins un mode de réalisation, une telle technique qui puisse être mise en oeuvre dans un encombrement limité, en particulier au sein d'une installation dont l'empreinte au sol est réduite

L'invention vise également à mettre en oeuvre une telle technique qui soit, dans au moins un mode de réalisation, simple, fiable, efficace et économique.

### 4. Exposé de l'invention

Ces objectifs, ainsi que d'autres qui apparaîtront par la suite, sont atteints à l'aide d'un procédé de traitement d'une eau à traiter qui selon l'invention comprend :
- une étape de clarification de ladite eau à traiter produisant une eau clarifiée,
- une étape de mise en contact d'une partie de ladite eau clarifiée avec un réactif adsorbant pulvérulent produisant un mélange eau clarifiée - réactif adsorbant pulvérulent ;
- une étape de mélange dudit mélange avec ladite eau à traiter ;
- une étape d'évacuation du reste d'eau clarifiée.

Ainsi, l'invention repose sur une approche tout à fait originale qui consiste à recirculer une partie d'une eau clarifiée provenant d'une clarification dans une zone dans laquelle elle est mise en contact avec un réactif adsorbant pulvérulent puis à introduire le mélange d'eau clarifiée et de réactif adsorbant obtenu dans l'eau brute à traiter en amont de la clarification.

Une telle mise en oeuvre peut permettre de produire une eau traitée dont la concentration en COT est inférieure ou égale à 2 mg/l à un débit inférieur à 2000 m³/h à partir d'une eau à traiter dont la concentration en COD est inférieure à 10 mg/l en employant peu de réactif adsorbant et dans une installation relativement compacte.

Au sens de l'invention, l'eau traitée est une eau brute ayant subi une première clarification, une adsorption sur un matériau adsorbant pulvérulent, un mélange avec de l'eau brute et une deuxième clarification.

La mise en oeuvre d'une technique selon l'invention s'inscrit donc dans le respect d'une démarche de développement durable dans la mesure où elle permet de produire une eau traitée présentant un niveau de qualité convenable non largement supérieur aux attentes en impliquant une faible consommation en réactif adsorbant à un coût relativement réduit. La technique selon l'invention évite donc de faire de la sur qualité.

Selon une caractéristique avantageuse de l'invention, ladite étape de clarification comprend :
- une étape de coagulation de ladite eau à traiter produisant une eau coagulée ;
- une étape de floculation de ladite eau coagulée produisant une eau floculée ;
- une étape de décantation de ladite eau floculée produisant ladite eau clarifiée et des boues.

La clarification est alors obtenue de manière simple et efficace par coagulation-floculation-décantation, le cas échéant lestée.

Le fait selon l'invention de mettre en contact de l'eau déjà coagulée et floculée permet d'adsorber sur le réactif pulvérulent seulement la partie adsorbable de la matière organique et non également une partie de la matière organique coagulable et floculable. Le réactif pulvérulent adsorbant est de ce fait utilisé à bon escient. La quantité de réactif adsorbant pulvérulent nécessaire au traitement de l'eau peut alors être réduite.

Le fait de mélanger de l'eau clarifiée avec un réactif adsorbant pulvérulent rend cette eau de nouveau coagulable et floculable. La mise en oeuvre de la technique selon l'invention permet par conséquent de coaguler et de floculer deux fois l'eau recirculée avant qu'elle ne soit recueillie.

Selon une caractéristique avantageuse, 25% à 75%, et préférentiellement 45% à 55% de ladite eau clarifiée provenant de ladite étape de décantation ou de ladite étape de clarification est mise en contact avec ledit réactif adsorbant pulvérulent.

De manière avantageuse, le débit de ladite eau clarifiée provenant de ladite étape d'évacuation est compris entre 40 et 2000 m³/h et préférentiellement entre 100 et 500 m³/h_{.}

Une technique selon l'invention est ainsi plus particulièrement destinée à être mise en oeuvre dans des installations de petite taille.

De manière préférentielle, la concentration en carbone organique dissous de ladite eau à traiter est inférieure à 10 mg/l.

Une technique selon l'invention est ainsi plus particulièrement destinée au traitement d'eau brute à potabiliser contenant moins de 10 mg/l et préférentiellement moins de 6 à 8 mg/l de COD.

De manière avantageuse, ledit réactif adsorbant pulvérulent est du charbon actif en poudre.

Un réactif adsorbant de ce type est particulièrement efficace.

Tout autre type de réactif adsorbant pulvérulent pourra être mis en oeuvre comme par exemples des résines, des hydroxydes ou oxydes de fer ou de manganèse, des carbonates de calcium et/ou de magnésium...

Dans un mode de réalisation préférentiel, ledit procédé comprend une étape d'épaississement desdites boues, et une étape d'introduction des boues épaissies ainsi obtenues dans ledit mélange.

Cette mise en oeuvre permet d'utiliser le réactif pulvérulent plusieurs fois du fait que les boues provenant de la décantation et de l'épaississement contiennent du réactif pulvérulent.

L'invention concerne également une installation de traitement d'une eau à traiter pour la mise en oeuvre d'un procédé tel que décrit précédemment, ladite installation comprenant des moyens de clarification de ladite eau à traiter et des moyens d'extraction d'une eau clarifiée en sortie desdits moyens de clarification.

Selon l'invention, une telle installation comprend des moyens de recirculation d'une partie de ladite eau clarifiée dans une zone agitée de pré-contact, des moyens d'injection d'un réactif adsorbant pulvérulent dans ladite zone de pré-contact, et une zone de mélange, ladite zone de mélange comprenant une première entrée reliée à la sortie de ladite zone de pré-contact, une deuxième entrée pour ladite eau à traiter, et une sortie débouchant dans lesdits moyens de clarification.

Dans un mode de réalisation avantageux, lesdits moyens de clarification comprennent une zone de coagulation, une zone de floculation et une zone de décantation montées en série, et des moyens d'extraction de ladite eau clarifiée en sortie de ladite zone de décantation, la sortie de ladite zone de mélange débouchant dans ladite zone de coagulation.

L'invention concerne également un procédé de réhabilitation d'une installation existante de traitement d'une eau à traiter comprenant des moyens de clarification de ladite eau à traiter, un tel procédé comprenant :
- une étape consistant à relier des moyens de recirculation d'une partie d'eau clarifiée à la sortie desdits moyens de clarification ;
- une étape consistant à relier lesdits moyens de recirculation à une zone de pré-contact comprenant des moyens d'injection d'un réactif adsorbant pulvérulent ;
- une étape consistant à installer une zone de mélange dont une première entrée est reliée à la sortie de ladite zone de pré-contact, une deuxième entrée est reliée à une arrivée de ladite eau à traiter et la sortie est reliée auxdits moyens de clarification.

La technique selon l'invention permet ainsi de réhabiliter de manière très simple toute installation existante de traitement d'eau par clarification ne permettant pas de produire une eau traitée dont la concentration en COT est inférieure ou égale à 2 mg/l en vue procurer une installation pour la mise en oeuvre un procédé de traitement selon l'invention afin de produire une eau traitée dont la concentration en COT est inférieure ou égale à 2 mg/l.

Il est ainsi possible de réutiliser des installations existantes en les transformant plutôt que de les détruire et d'en construire de nouvelles de toutes pièces. L'invention s'inscrit en ce sens dans une démarche de développement durable.

Selon une caractéristique avantageuse, lesdits moyens de clarification comprennent une zone de coagulation, une zone de floculation et une zone de décantation montées en série, et des moyens d'extraction d'une eau clarifiée en sortie de ladite zone de décantation, ledit procédé comprenant :
- une étape consistant à relier des moyens de recirculation d'une partie d'eau clarifiée à la sortie de ladite zone de décantation ;
- une étape consistant à relier lesdits moyens de recirculation à une zone de pré-contact comprenant des moyens d'injection d'un réactif adsorbant pulvérulent ;
- une étape consistant à installer une zone de mélange dont une première entrée est reliée à la sortie de ladite zone de pré-contact, une deuxième entrée est reliée à une arrivée de ladite eau à traiter et la sortie est reliée à ladite zone de coagulation.

La technique selon l'invention permet ainsi de recycler une installation existante de traitement par coagulation-floculation-décantation le cas échéant lestée en vue de procurer une installation pour la mise en oeuvre d'un procédé de traitement permettant de produire sans sur qualité une eau potable dont la concentration en COT est inférieure à 2 mg/l.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre un exemple d'une installation de traitement d'eau selon l'invention ;
- la figure 2 illustre une installation de traitement d'eau par coagulation-floculation-décantation lestée selon l'art antérieur ;
- la figure 3 illustre une installation de traitement d'eau par coagulation-floculation-décantation lestée selon l'art antérieur qui met en oeuvre une cuve de pré-contact de l'eau brute à traiter avec du CAP en amont de la coagulation ;
- la figure 4 illustre une installation mise en oeuvre par les inventeurs au cours d'essais et qui met en série les installations respectivement illustrées aux figures 2 et 3.

### 6. Description d'un mode de réalisation de l'invention

### 6.1. Rappel du principe général de l'invention

Le principe général de l'invention repose sur le fait de recirculer une partie d'une eau clarifiée provenant d'une clarification dans une zone dans laquelle elle est mise en contact avec un réactif adsorbant en poudre puis à introduire dans l'eau brute à traiter le mélange d'eau clarifiée et de réactif adsorbant obtenu en amont de la clarification.

Une telle mise en oeuvre peut permettre de produire une eau traitée dont la concentration en COT est inférieure ou égale à 2 mg/l à un débit inférieur à 2000 m³/h à partir d'une eau brute dont la concentration en COD est inférieure à 10 mg/l en employant peu de réactif adsorbant et dans une installation relativement compacte.

### 6.2. Exemple d'une installation selon l'invention

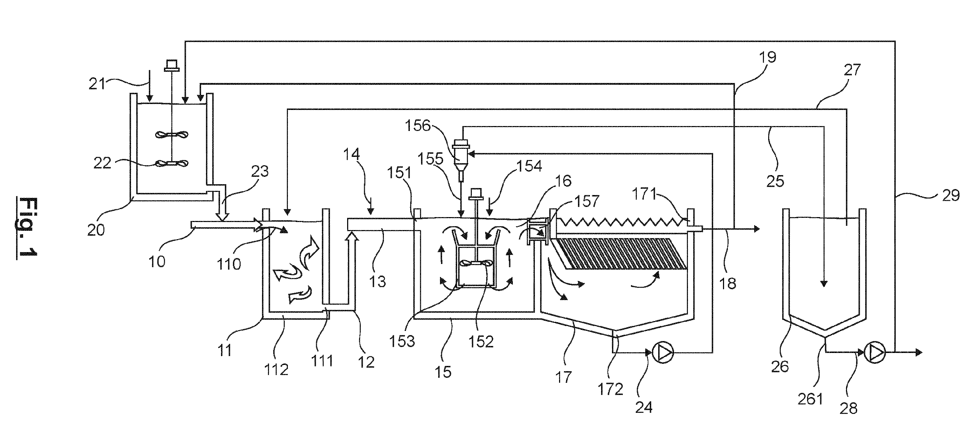

On présente, en relation avec la figure 1, un mode de réalisation d'une installation de traitement d'eau selon l'invention.

Ainsi que cela est représenté sur cette figure 1, une telle installation comprend une conduite d'arrivée d'eau brute à traiter 10. La sortie de cette conduite 10 débouche dans une zone de mélange comprenant une cuve de mélange 11.

La cuve de mélange 11 comprend une entrée 110 en partie supérieure et une sortie 111 à proximité de son fond 112. La sortie 111 est reliée à une canalisation 12.

La canalisation 12 débouche dans une zone de coagulation qui comprend un mélangeur statique 13 et des moyens d'injection d'un réactif coagulant 14, comme un injecteur, dans le mélangeur statique 13. Le mélangeur statique 13 débouche à l'entrée 151 d'une cuve de floculation 15 d'une zone de floculation.

La cuve de floculation 15 loge un agitateur 152 qui comprend des pales susceptibles d'être entraînées en rotation autour d'un axe essentiellement vertical.

L'agitateur 152 est logé à l'intérieur d'un guide flux 153 dont la partie inférieure définit un cylindre creux et la partie supérieure définit un tronc de cône.

La zone de floculation comprend des moyens d'injection d'un réactif floculant 154 dans la cuve de floculation 15. Elle comprend également des moyens d'injection de lest dans la cuve de floculation 15. Dans ce mode de réalisation, le lest est du microsable 155 et les moyens d'injection de lest comprennent un hydrocyclone 156.

La cuve de floculation 15 comprend une sortie 157 pourvue d'un déflecteur 16 pour optimiser la circulation hydraulique, et qui débouche dans une zone de séparation liquide/solide qui comprend un décanteur lamellaire 17.

Le décanteur lamellaire 17 comprend en partie supérieure une sortie d'eau clarifiée 171 et en partie inférieure une sortie de boues de décantation 172.

La sortie d'eau clarifiée 171 est reliée à une canalisation d'extraction d'eau traitée 18.

Une canalisation de recirculation d'eau clarifiée 19 est reliée en dérivation sur la canalisation d'extraction 18. Elle débouche dans la cuve de pré-contact 20 d'une zone de pré-contact.

La zone de pré-contact comprend des moyens d'injection d'un réactif adsorbant pulvérulent 21. Dans ce mode de réalisation, il s'agit de charbon actif en poudre (CAP). Elle comprend également un agitateur à pales 22 susceptible d'être entraîné à rotation autour d'un axe essentiellement vertical à l'intérieur de la cuve de pré-contact 20.

Le fond de la cuve de pré-contact 20 comprend une sortie d'un mélange d'eau clarifiée et de CAP qui est reliée à une canalisation 23 qui débouche dans la canalisation d'amenée d'eau brute 10.

La sortie de boues 172 est reliée à une canalisation de recirculation 24 qui débouche à l'entrée de l'hydrocyclone 156.

L'hydrocyclone 156 comprend une sortie d'un mélange de boues et d'une très faible quantité de lest qui est reliée à une canalisation 25. Ces boues contiennent du CAP. La canalisation 25 débouche dans une cuve d'épaississement 26.

Une canalisation de recirculation d'un surnageant 27 relie la partie supérieure de la cuve d'épaississement 26 à la cuve de mélange 11.

La cuve d'épaississement 26 comprend en partie inférieure une sortie de boues épaissies 261.

La sortie de boues 261 est reliée à une canalisation d'extraction de boues 28.

Une canalisation de recirculation de boues épaissies 29 est montée en dérivation sur la canalisation d'extraction de boues 28 et débouche dans la cuve de pré-contact 20.

### 6.3. Exemple d'un procédé selon l'invention

Un procédé selon l'invention consiste par exemple à acheminer une eau à traiter via la canalisation d'amenée 10 dans la cuve de mélange 11 à un débit compris entre 40 et 2000 m³/h et préférentiellement entre 100 et 500 m³/h.

L'eau à traiter présente préférentiellement une concentration en COD inférieure à 10 mg/l et préférentiellement inférieure à 6 à 8 mg/l.

L'eau à traiter est ensuite acheminée via la canalisation 12 dans le mélangeur statique 13 au sein duquel elle est mise en contact avec au moins un réactif coagulant introduit dans le mélangeur statique 13 par les moyens d'injection 14. La concentration de l'eau en coagulant sera préférentiellement comprise entre 10 et 250 ppm. Il pourra par exemple s'agir de FeC13 ou d'un coagulant à base d'aluminium.

L'eau coagulée est ensuite introduite dans la cuve de floculation 15. Au moins un réactif floculant est injecté via les moyens d'injection 154 dans la cuve de floculation 15 agitée. La concentration de l'eau en floculant sera préférentiellement comprise entre 0,1 et 1 ppm. Du microsable 155 est également injecté dans la cuve de floculation 15 via l'hydrocyclone 156.

L'eau floculée provenant de la cuve de floculation 15 est ensuite introduite dans le décanteur 17 via la sortie 157 et le déflecteur 16. L'eau clarifiée y est séparée des boues.

L'eau clarifiée est extraite en surverse du décanteur via la sortie 171 et la canalisation d'extraction 18.

Entre 25 et 75% et préférentiellement entre 45 et 55% de l'eau clarifiée extraite circulant dans la canalisation 18 est recirculée via la canalisation 19 dans la cuve de pré-contact 20.

L'eau clarifiée recirculée y est mise en contact avec un réactif adsorbant pulvérulent, qui dans ce mode de réalisation est du CAP, qui est introduit dans la cuve de pré-contact 20 agitée via les moyens d'injection 21. La concentration en CAP du mélange obtenu est préférentiellement comprise entre 0 et 200 ppm selon la nature du CAP mis en oeuvre et le type d'eau à traiter. Elle sera ainsi préférentiellement comprise entre 0 et 30 ppm pour le traitement d'une eau potable et préférentiellement entre 0 et 200 ppm pour le traitement d'une eau usée industrielle ou autre.

Le mélange d'eau clarifiée et de CAP provenant de la cuve de pré-contact 20 est introduit dans la cuve de mélange 11 via la canalisation 23. L'eau à traiter ainsi que le mélange d'eau clarifiée et de CAP y sont mélangés ensemble.

Le mélange d'eau brute, d'eau clarifiée recirculée et de CAP ainsi obtenu subit une coagulation, une floculation et une décantation.

Comme cela a été expliqué, en sortie du décanteur 17, entre 25 et 75% et préférentiellement entre 45 et 55% de l'eau clarifiée extraite circulant dans la canalisation 18 est recirculée via la canalisation 19 dans la cuve de pré-contact 20. Le reste de l'eau clarifiée est évacuée vers un traitement tertiaire. Ce reste d'eau clarifiée, constitué en partie d'une eau brute ayant subi une première clarification (coagulation, floculation, décantation), une adsorption sur CAP et une deuxième clarification, forme au sens de l'invention de l'eau traitée.

Les boues provenant du décanteur 17 en sont extraites en sousverse via la sortie 172 puis introduites dans l'hydrocyclone 156 via la canalisation 24.

Les boues et le microsable sont séparés dans l'hydrocyclone 156. Un mélange de microsable et d'une très faible quantité de boues est extrait en souverse de l'hydrocyclone et injecté dans la cuve de floculation 15. Un mélange de boues contenant du CAP et d'une très faible quantité de microsable est extrait en surverse de l'hydrocyclone 156 et injecté via la canalisation 25 dans la cuve d'épaississement 26.

Des boues contenant du CAP décantent au fond de la cuve d'épaississement 26. Des surnageants sont extraits de cette cuve d'épaississement 26 et recirculés dans la cuve de mélange 11 via la canalisation 27. Les boues épaissies sont extraites de la cuve d'épaississement 26 via la sortie 261 et la canalisation 28. Une partie des boues extraites est évacuée en vue d'un traitement ultérieur. L'autre partie des boues est recirculée dans la cuve de pré-contact 20 via la canalisation 29.

### 6.4. Variantes

Dans une variante, la cuve de mélange 11 pourra être remplacée par une canalisation en T comprenant une entrée d'eau à traiter reliée à la canalisation 10, une entrée d'un mélange d'eau traitée et de réactif adsorbant reliée à la sortie de la cuve de pré-contact 20, et une sortie reliée au mélangeur statique 13.

Dans une variante, la cuve d'épaississement 26 ainsi que les canalisations 28 et 29 pourront également être supprimées. Dans ce cas, les boues provenant de l'hydrocyclone seront directement extraites de l'installation en vue d'un traitement ultérieur sans qu'une partie de ces boues soit recirculée dans la cuve de pré-contact 20. Dans de telles variantes, les étapes du procédé impliquant ces éléments ne seront pas mises en oeuvre. Il est noté que la mise en oeuvre de la recirculation des boues permet d'économiser environ 10% du CAP.

Il pourra également être prévu de mettre en oeuvre des moyens de séparation liquide-solide autres qu'un décanteur lamellaire. Il pourra par exemple s'agir d'un décanteur classique. Le déflecteur 16 pourra également ne pas être mis en oeuvre. La cuve de floculation 15 pourra ne pas loger de guide flux. Le mélangeur statique 13 pourra être remplacé par une cuve agitée.

Dans l'exemple décrit plus haut, la clarification de l'eau à traiter était une coagulation-floculation-décantation lestée. Dans un autre mode de réalisation, il pourra s'agir d'une coagulation-floculation-décantation classique. Il pourra également s'agir d'un autre type de clarification, comme par exemple une coagulation-floculation-flottation ou autre.

### 6.5. Essais

Une série de sept essais a été réalisée en vue d'attester l'efficacité d'une technique de traitement d'eau selon l'invention. Les résultats de ces essais, qui sont décrits plus en détail ci-après, figurent dans le tableau représenté ci-dessous.

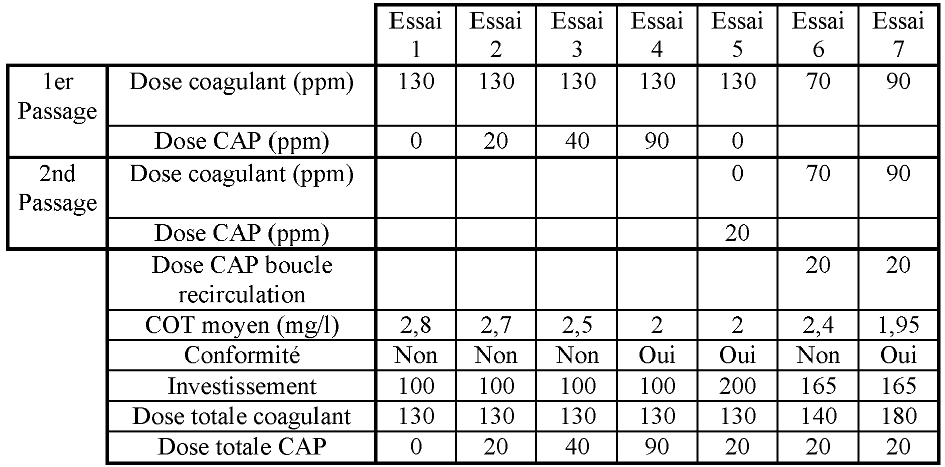

Un premier essai a consisté à faire transiter une eau brute dans une installation de traitement d'eau par coagulation-floculation-décantation lestée telle que celle illustrée à la figure 2.

Une telle installation comprend une canalisation d'amenée d'eau brute 30 dans laquelle débouchent des moyens d'injection de coagulant 31. La canalisation 30 débouche dans une cuve agitée de coagulation 32. La cuve agitée de coagulation 32 communique avec une cuve agitée de floculation 33 dans laquelle débouchent des moyens d'injection de floculant 34 et la souverse d'un hydrocyclone 35 d'où s'écoule du microsable. La cuve de floculation 33 débouche dans un décanteur lamellaire 36 dont la surverse est reliée à une canalisation d'extraction d'eau traitée 37 et la souverse est reliée à une canalisation d'extraction de boues 38. La canalisation d'extraction de boues 38 débouche à l'entrée de l'hydrocyclone 35 dont la surverse est reliée à une canalisation d'évacuation de boues 39.

L'eau brute présentait une concentration en COD comprise entre 7,9 et 8,5 mg/l.

Le débit d'eau traitée était de 2 m³/h.

Le coagulant était du FeCl₃ à raison de 130 ppm et la durée de coagulation de deux minutes.

Le polymère floculant était du AN905 à raison de 0,4 ppm.

Le microsable était injecté dans la cuve de floculation à raison de 100 l/h de manière telle que la concentration en microsable y soit égale à 11 g/l.

Les boues étaient extraites du décanteur et recirculées dans l'hydrocyclone à un débit compris entre 280 et 3001/h.

Au cours de ce premier essai, la concentration moyenne en COT de l'eau traitée était égale à 2,8 mg/l et ne répondait donc pas à l'objectif de produire une eau dont la concentration moyenne en COT soit inférieure ou égale à 2 mg/l.

Un deuxième essai a consisté à traiter l'eau brute dans une installation illustrée à la figure 3 qui est semblable à celle de la figure 2 à ceci près qu'elle comprend une cuve de pré-contact 40 dans laquelle l'eau brute est mise en contact avec du CAP 44, cette cuve de pré-contact 40 débouchant dans la cuve agitée de coagulation 32. Dans cette installation, l'hydrocyclone 35 comprend une entrée d'eau de service 41. Sa surverse est reliée à une canalisation de recirculation 42 de CAP dans la cuve de pré-contact 40 et à une canalisation d'extraction de CAP usé 43. Le taux de recirculation du CAP était compris entre 0 à 50% du flux massique de CAP présent dans le décanteur 36.

Au cours de ce deuxième essai, 20 ppm de CAP AFP 23 étaient injectés dans la cuve de pré-contact.

La concentration moyenne en COT de l'eau traitée lors de ce deuxième essai était égale à 2,7 mg/l et ne répondait pas à l'objectif de produire une eau dont la concentration moyenne en COT soit inférieure ou égale à 2 mg/l.

Un troisième essai a consisté à traiter l'eau brute de la même manière qu'au cours du deuxième essai à ceci près que 40 ppm de CAP AFP 23 étaient injectés dans l'eau brute.

Au cours de ce troisième essai, la concentration moyenne en COT de l'eau traitée était égale à 2,5 mg/l et ne répondait pas à l'objectif de produire une eau dont la concentration moyenne en COT soit inférieure ou égale à 2 mg/l.

Un quatrième essai a consisté à traiter l'eau brute de la même manière qu'au cours du troisième essai à ceci près que 90 ppm de CAP AFP 23 étaient injectés dans l'eau brute.

Au cours de ce quatrième essai, la concentration moyenne en COT de l'eau traitée était égale à 2 mg/l. La mise en oeuvre de cette technique permet donc de produire une eau traitée conforme. Toutefois, elle implique une consommation importante en CAP.

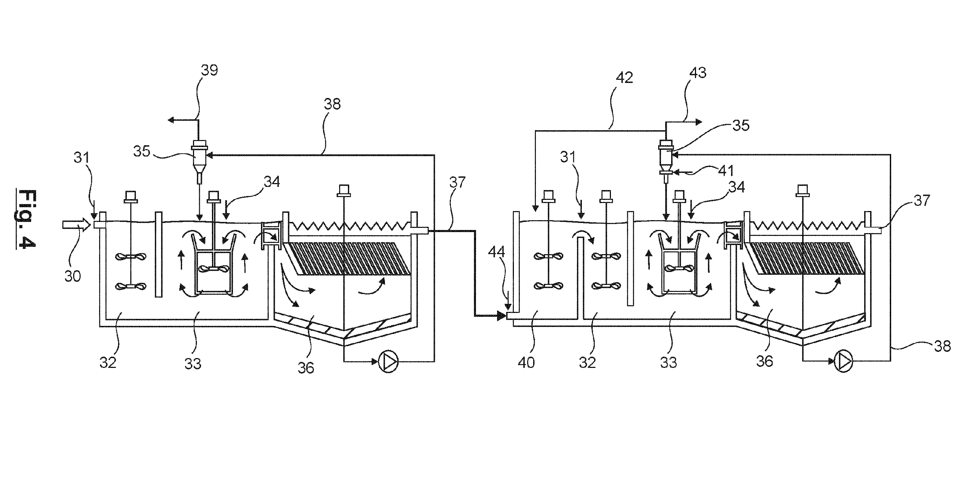

Au cours d'un cinquième essai, les inventeurs ont monté en série l'installation mise en oeuvre au cours du premier essai avec l'installation mise en oeuvre au cours du deuxième essai pour obtenir l'installation illustrée à la figure 4. Dans ce cas, la totalité de l'eau traitée provenant de la surverse du premier décanteur était introduite dans la cuve de pré-contact 39.

Le débit d'eau traitée extrait était de 2 m³/h. Les doses de coagulant injectées dans les première et deuxième cuves de coagulation étaient respectivement de 130 ppm et 0 ppm.

Au cours de ce cinquième essai, la concentration moyenne en COT de l'eau traitée était égale à 2 mg/l. L'eau traitée produite était donc conforme.

La mise en oeuvre d'une telle technique permet donc de produire une eau conforme de la même manière que la technique mise en oeuvre au cours du quatrième essai en impliquant toutefois une consommation en CAP plus réduite. Néanmoins, le coût d'investissement pour l'installation du cinquième essai est deux fois plus élevé que le coût d'investissement pour l'installation du quatrième essai.

Un sixième essai a consisté à faire transiter une eau brute dans une installation telle que celle illustrée à la figure 1.

L'eau brute présentait une concentration en COD comprise entre 7,9 et 8,5 mg/l.

Le débit d'eau traitée extrait était de 1 m³/h. Le débit d'eau traitée recirculée dans la cuve de pré-contact était également de 1 m³/h.

Le coagulant était du FeCl₃ à raison de 70 ppm et la durée de coagulation égale à deux minutes.

Le polymère était du AN905 à raison de 0,4 ppm.

Le CAP était du AFP 23 à raison de 20 ppm et le temps de contact de l'eau traitée avec le CAP était de cinquante minutes.

Le microsable était injecté dans la cuve de floculation à raison de 100 1/h de la manière que la concentration en microsable y soit égale à 11g/l.

Les boues étaient extraites du décanteur et recirculées dans l'hydrocyclone à un débit compris entre 280 et 3001/h.

Les boues étaient extraites de l'hydrocyclone à un débit de 200 1/h puis introduites dans la cuve d'épaississement.

Le mélange d'eau traitée et de CAP était extrait de la cuve de pré-contact à un débit de 1 m³/h et injecté dans l'eau brute.

Au cours de ce sixième essai, la concentration moyenne en COT de l'eau traitée était égale à 2,4 mg/l et ne répondait pas à l'objectif de produire une eau dont la concentration moyenne en COT soit inférieure ou égale à 2 mg/l.

Un septième essai a consisté à traiter l'eau brute de la même manière qu'au cours du sixième essai à ceci près que 90 ppm de coagulant était injectés dans l'eau brute.

Au cours de ce septième essai, la concentration moyenne en COT de l'eau traitée était égale à 2 mg/l. L'eau traitée produite était donc conforme.

La mise en oeuvre de la technique selon l'invention permet donc de produire un volume identique d'une eau traitée conforme, c'est-à-dire dont la concentration en COT est inférieure ou égale à 2 mg/l, au sein d'une installation plus chère que l'installation du quatrième essai mais impliquant une consommation en CAP environ 78% plus réduite. Elle permet également de produire un volume identique d'une eau traitée conforme au sein d'une installation moins chère que celle mise en oeuvre au cours du cinquième essai tout en impliquant une consommation identique en CAP. En outre, une installation selon l'invention présente une empreinte au sol à peine plus grande que celle de l'installation mise en oeuvre au cours du quatrième essai, et nettement plus faible que celle mise en oeuvre au cours du cinquième essai.

Il est à noter que dans le domaine de la production d'eau potable, les collectivités territoriales préfèrent acquérir des installations moins chères à l'achat mais légèrement plus chère à exploiter de manière à ne pas amputer de manière trop conséquente leur budget d'investissement. Ceci est d'autant plus vrai que la durée des contrats d'exploitation des installations de traitement d'eau tend à baisser, celle-ci étant passée de 15 ans il y à quelques années à 7 ans à présent.

La mise en oeuvre de la technique selon l'invention permet de procurer une technique de traitement d'eau répondant à cette attente.

Au final, la technique selon l'invention présente l'avantage de permettre de produire sans surqualité une eau traitée dont la concentration en COT est inférieure ou égale à 2 mg/l, dans une installation relativement compacte, en impliquant une consommation réduite en réactif adsorbant.

### 6.6. Réhabilitation

Une installation de traitement d'eau selon l'art antérieur peut facilement être réhabilité de manière à procurer une installation selon l'invention.

Ainsi, l'installation illustrée à la figure 3 pourra par exemple être réhabilité :
- en faisant de la cuve de pré-contact 40 une cuve de mélange ;
- en plaçant en amont de cette cuve de mélange une cuve de pré-contact qui débouche dans la canalisation d'amenée d'eau brute dans la cuve de mélange ;
- en mettant en place des moyens d'injection de CAP dans la cuve de pré-contact, et
- en installant une canalisation de recirculation d'une partie de l'eau traitée extraite de décanteur dans la cuve de pré-contact.

La mise en oeuvre de la technique selon l'invention peut donc s'inscrire dans une politique de développement durable du fait qu'elle permet de réemployer, en les modifiant, des installations existantes de traitement d'eau qui seraient vouée au rebut, dans le but de produire une eau traitée dont la concentration en COT est inférieure ou égale à 2 mg/l.

## Revendications

1. Procédé de traitement d'une eau à traiter comprenant :
- une étape de clarification de ladite eau à traiter produisant une eau clarifiée,
- une étape de mise en contact d'une partie de ladite eau clarifiée avec un réactif adsorbant pulvérulent produisant un mélange eau clarifiée-réactif adsorbant pulvérulent ;
- une étape de mélange dudit mélange avec ladite eau à traiter ;
- une étape d'évacuation du reste d'eau clarifiée.

2. Procédé selon la revendication 1, **caractérisé en ce que** ladite étape de clarification comprend :
- une étape de coagulation de ladite eau à traiter produisant une eau coagulée ;
- une étape de floculation de ladite eau coagulée produisant une eau floculée ;
- une étape de décantation de ladite eau floculée produisant ladite eau clarifiée et des boues.

3. Procédé selon la revendication 1 ou 2, **caractérisé en ce que** entre 25% et 75% de ladite eau clarifiée provenant de ladite étape de clarification ou de ladite étape de décantation est mise en contact avec ledit réactif adsorbant pulvérulent.

4. Procédé selon la revendication 3, **caractérisé en ce que** 45% et 55% de ladite eau clarifiée provenant de ladite étape de clarification ou de ladite étape de décantation est mise en contact avec ledit réactif adsorbant pulvérulent.

5. Procédé selon l'une quelconque des revendications 1 à 4, **caractérisé en ce que** la concentration en carbone organique dissous de ladite eau à traiter est inférieure à 10 mg/l.

6. Procédé selon l'une quelconque des revendications 1 à 5, **caractérisé en ce que** ledit réactif adsorbant pulvérulent est du charbon actif en poudre.

7. Procédé selon l'une quelconque des revendications 2 à 6, **caractérisé en ce qu'**il comprend une étape d'épaississement desdites boues, et une étape d'introduction des boues épaissies ainsi obtenues dans ledit mélange.

8. Installation de traitement d'une eau à traiter pour la mise en oeuvre d'un procédé selon l'une quelconque des revendications 1 à 7, ladite installation comprenant des moyens de clarification de ladite eau à traiter (13, 14, 15, 154, 17) et des moyens d'extraction (18) d'une eau clarifiée en sortie desdits moyens de clarification (13, 14, 15, 154, 17),
**caractérisée en ce qu'**elle comprend des moyens de recirculation (19) d'une partie de ladite eau clarifiée dans une zone agitée de pré-contact (20), des moyens d'injection d'un réactif adsorbant pulvérulent (21) dans ladite zone de pré-contact (20), et une zone de mélange (10, 11), ladite zone de mélange (10, 11) comprenant une première entrée (110) reliée à la sortie de ladite zone de pré-contact (20), une deuxième entrée (110) pour ladite eau à traiter, et une sortie débouchant dans lesdits moyens de clarification (111).

9. Installation selon la revendication 8, **caractérisée en ce que** lesdits moyens de clarification comprennent une zone de coagulation (13), une zone de floculation (15) et une zone de décantation (17) montées en série, et des moyens d'extraction (171, 18) de ladite eau clarifiée en sortie de ladite zone de décantation (17), la sortie de ladite zone de mélange (111) débouchant dans ladite zone de coagulation (13).

10. Procédé de réhabilitation d'une installation de traitement d'une eau à traiter comprenant des moyens de clarification (13, 14, 15, 154, 17) de ladite eau à traiter, **caractérisé en ce qu'**il comprend :
- une étape consistant à relier des moyens de recirculation (19) d'une partie d'eau clarifiée à la sortie desdits moyens de clarification ;
- une étape consistant à relier lesdits moyens de recirculation (19) à une zone de pré-contact (20) comprenant des moyens d'injection d'un réactif adsorbant pulvérulent (21) ;
- une étape consistant à installer une zone de mélange (11) dont une première entrée est reliée à la sortie de ladite zone de pré-contact, une deuxième entrée est reliée à une arrivée de ladite eau à traiter et la sortie est reliée auxdits moyens de clarification (13, 14, 15, 154, 17).

11. Procédé de réhabilitation selon la revendication 10, **caractérisé en ce que** lesdits moyens de clarification comprennent une zone de coagulation (13), une zone de floculation (15) et une zone de décantation (17) montées en série, et des moyens d'extraction (18) d'une eau clarifiée en sortie de ladite zone de décantation (17), ledit procédé comprenant :
- une étape consistant à relier des moyens de recirculation (19) d'une partie d'eau clarifiée à la sortie de ladite zone de décantation (17) ;
- une étape consistant à relier lesdits moyens de recirculation (19) à une zone de pré-contact (20) comprenant des moyens d'injection d'un réactif adsorbant pulvérulent (21) ;
- une étape consistant à installer une zone de mélange (11) dont une première entrée est reliée à la sortie de ladite zone de pré-contact (20), une deuxième entrée est reliée à une arrivée de ladite eau à traiter et la sortie est reliée à ladite zone de coagulation (13).
